# FASCICULE DE BREVET EUROPEEN

(11) **EP 2 509 428 B1**
(45) Date de publication et mention de la délivrance du brevet: **19.09.2018**
(21) Numéro de dépôt: 10801635.3
(22) Date de dépôt: 07.12.2010
(51) Int. Cl.: A23B 4/09, A23L 3/375, F25D 3/11

(54) **PROCEDE ET INSTALLATION DE REFROIDISSEMENT ET/OU SURGELATION DE PRODUITS, METTANT EN OEUVRE L'INJECTION DE DEUX LIQUIDES CRYOGENIQUES**
VERFAHREN UND VORRICHTUNG ZUR KÜHLUNG UND/ODER TIEFKÜHLUNG VON MATERIALIEN MITTELS INJEKTION VON ZWEI KRYOGENEN FLÜSSIGKEITEN
METHOD AND APPARATUS FOR COOLING AND/OR DEEP-FREEZING MATERIALS IMPLEMENTING THE INJECTION OF TWO CRYOGENIC LIQUIDS

(30) Priorité: 08.12.2009 FR 0958735
(43) Date de publication de la demande: 17.10.2012
(73) Titulaire: L'Air Liquide Société Anonyme pour l'Etude et l'Exploitation des Procédés Georges Claude, 75007 Paris (FR)
(72) Inventeur: COUSIN, Franck, F-44250 Saint Brevin Les Pins (FR); FACHON, Nicolas, F-62250 Marquise (FR); FREDERICK, Willy, F-17270 Clerac (FR); KOWALEWSKI, Pierre, F-75016 Paris (FR); PERROT-MINOT, Maryline, F-42410 Verlieu (FR)
(74) Mandataire: Mellul-Bendelac, Sylvie Lisette
(86) Numéro de dépôt international: PCT/FR2010/052627
(87) Numéro de publication internationale: WO 2011/070283

(56) Documents cités:
- EP-A1- 0 904 699
- EP-A1- 1 856 989
- EP-A2- 0 923 883
- EP-A2- 1 530 910
- EP-A2- 1 887 296
- WO-A1-00/36351
- WO-A1-99/34692
- WO-A1-99/34693
- DE-A1-102008 009 172
- FR-A1- 2 764 366
- JP-A- 7 294 085
- US-A- 5 577 392
- US-B1- 6 167 709
- US-B1- 6 279 328

## Description

La présente invention concerne le domaine des procédés de refroidissement et/ou surgélation du contenu d'une enceinte à l'aide d'un liquide cryogénique. Elle concerne, en particulier, le refroidissement de produits alimentaires dans des appareils du type tunnels, mélangeurs, malaxeurs, broyeurs ou pétrins, barattes, tambours (« tumblers » dans la littérature) etc..., le contenu de l'appareil pouvant être alors solide ou pâteux comme c'est le cas de la viande, ou encore liquide.

Les documents suivants illustrent l'état de la technique du refroidissement de produits alimentaires dans de tels équipements, que ce soit par l'intervention d'un gaz ou d'un fluide cryogénique, ou encore l'état de la technique de la réalisation de mélanges de cryogènes à cette fin : WO99/34693, JP-7 294085, EP-1 856 989, EP-1 530 910, WO99/34692, DE-10 2008 009172, WO00/36351, EP-1 887 296, US-6 279 328, EP-923 883.

Si dans ce qui suit on explicite plus particulièrement le cas des produits alimentaires, l'invention ne doit en aucune manière être restreinte à leur cas, elle concerne de façon beaucoup plus générale de nombreux autres produits, et notamment chimiques, biologiques, cellules souches etc...subissant de telles opérations de refroidissement cryogénique.

On décrit dans ce qui suit plus en détail le cas des malaxeurs broyeurs, afin de mieux fixer les idées des problématiques qui se posent.

Dans de telles applications d'utilisation des liquides cryogéniques pour le refroidissement de produits alimentaires dans des malaxeurs broyeurs, l'utilisation de CO₂ est privilégiée, pour sa capacité à transférer beaucoup de frigories au changement d'état.

En considérant l'exemple des mélangeurs de viande, on sait qu'il existe une littérature très abondante concernant l'utilisation de CO₂ liquide, tout particulièrement en injection dans la partie basse du malaxeur, afin d'améliorer les conditions d'échange thermique entre le liquide cryogénique et la viande. On se reportera, par exemple, aux documents U.S.-4,476,686 et EP-744,578.

L'application au domaine de la viande est en effet tout à fait massive et emblématique (les produits concernés sont très variés, steak haché (boeuf, veau), viande égrainée, haché de porc (saucisses..), haché de volailles (cordon bleu, nuggets etc....)), d'un domaine où le contrôle de la température dans le malaxeur doit être très efficace :
- il est nécessaire de compenser l'échauffement mécanique lié au mélange et au hachage ;
- il est souhaitable d'obtenir une texture compatible pour le formage ultérieur.

Mais il faut noter que pour plusieurs raisons, la demande de ce secteur industriel pour le contrôle de température de malaxeurs broyeurs s'oriente vers l'utilisation d'azote liquide. Or on sait que pour l'azote liquide la valorisation des frigories au changement d'état est deux fois moins importante que pour le CO₂.

On résume alors dans ce qui suit les principales caractéristiques des procédés d'injection haute ou basse, en CO₂ ou en azote, dans de tels malaxeurs.

### L'injection haute CO₂ :

- On valorise la seule phase solide du CO₂ mais le rendement frigorifique est intéressant à 64 kcal/kg à 20 bar.
- La technique nécessite un niveau de chargement optimum et demande d'adapter le nombre de tromblons (injecteurs) de façon à déposer la neige carbonique sur la totalité de la surface des viandes sans créer d'amas de neige, mais il faut reconnaître que la mise en oeuvre en injection haute est aisée.
- Elle se caractérise par une grande facilité de mélange des phases solide viande/solide neige, la neige carbonique est générée au coeur du produit.
- La technique présente toujours le risque d'extraire de la neige carbonique, il est donc préférable de privilégier le mode d'extraction par débordement.
- Cette technique est traditionnellement limitée aux petits mélangeurs et petits volumes de production (typiquement inférieurs à 100 tonnes par an).
- Le CO₂ présente par ailleurs un effet bactériostatique, il limite le développement des micro-organismes.

### L'injection haute azote :

- On l'a signalé plus haut, cette technique est limitée par un rendement frigorifique faible, voisin de 36 kcal/kg à 1,5 bar.
- Elle se caractérise également par le fait qu'elle présente des risques de points froids et donc par une répartition difficile.
- L'injection haute azote nécessite donc de contrôler et de maîtriser une pression basse d'injection.
- Pour l'ensemble de ces raisons, il faut noter que l'injection haute azote est très peu utilisée.

L'injection basse CO₂ et azote : elle permet de valoriser la chaleur latente du changement d'état des fluides cryogéniques ainsi qu'une partie de la chaleur spécifique des gaz. Cette valorisation des gaz dépend du temps de contact avec le produit.

Si en injection haute l'azote liquide présentait un handicap de rendement frigorifique très important par rapport au CO₂, en injection basse, le rendement frigorifique de l'azote se rapproche de celui du CO₂ (le temps de contact entre le gaz et le produit permet de valoriser les gaz). L'azote présente par ailleurs l'avantage d'offrir une solubilité dans les matières grasses et l'eau bien plus faible que le CO₂.

La consommation de fluide constatée est environ 20% plus importante en injection basse azote par rapport à l'injection basse CO₂.

Dans l'ensemble de ce contexte, on conçoit, et c'est un des objectifs de la présente invention, qu'il serait avantageux de pouvoir disposer d'un nouveau procédé de refroidissement de produits dans de tels appareils, et notamment dans des malaxeurs en injection basse du fluide, procédé permettant une meilleure valorisation des gaz et notamment de valoriser la partie des gaz qui ne l'est pas actuellement dans les procédés existants.

Comme on le verra plus en détail dans ce qui suit, le procédé selon l'invention, de refroidissement de produits dans un appareil de refroidissement, à l'aide d'un liquide cryogénique mis en contact avec les produits, est remarquable en ce que l'on va obtenir une meilleure valorisation des gaz grâce à l'injection non pas d'un seul fluide mais de deux fluides - azote liquide et CO₂ liquide-et au travers d'échanges de frigories entre le CO₂ et l'azote, l'azote liquide et le CO₂ liquide étant injectés selon l'invention séparément en au moins deux points d'injection de l'appareil.

En fixant une fois de plus les idées dans le cas de l'exemple de l'injection basse dans un malaxeur, le procédé selon l'invention, de refroidissement d'une masse de produit contenue dans une enceinte (de type mélangeur, malaxeur, broyeur...), à l'aide d'un liquide cryogénique injecté au sein de la masse de matière dans la partie basse de l'enceinte, est remarquable en ce que l'on va obtenir une meilleure valorisation des gaz grâce à l'injection de deux fluides -azote et CO₂- et non un seul fluide, et au travers d'échanges de frigories entre le CO₂ et l'azote.

La présente invention concerne alors un procédé de refroidissement de produits, notamment alimentaires, dans un appareil de refroidissement, l'appareil utilisé étant une enceinte de type mélangeur, malaxeur, ou encore broyeur ou pétrin, pouvant contenir une masse de produit à refroidir, à l'aide d'un liquide cryogénique injecté au sein de la masse de matière dans la partie basse de l'enceinte, se caractérisant en ce que l'on injecte au sein de la masse de matière dans la partie basse de l'enceinte deux liquides cryogéniques, azote et CO₂, l'azote liquide et le CO₂ liquide étant injectés séparément en au moins deux points d'injection de l'appareil.

On notera que parmi l'abondante littérature traitant de l'injection d'un liquide cryogénique dans un appareil de refroidissement cryogénique, on trouve le document EP-1 887 296 qui s'intéresse à la réalisation de mélanges de cryogènes pour alimenter des appareils de refroidissement de produits. Ce document considère qu'il n'est pas satisfaisant d'injecter des fluides différents par des voies séparées, il recommande la réalisation d'un mélange en amont de l'enceinte de refroidissement et l'injection de ce mélange pré-effectué, il réalise alors le mélange de cryogènes (gazeux et/ou liquides et /ou solides) de façon très conventionnelle par l'utilisation d'une chambre de mélange amont etc...

Nous montrerons ci-dessous, notamment par des exemples comparatifs, mais aussi par des modes extrêmement efficaces de réalisation des mélanges au point de connexion sur un appareil de type malaxeur, que l'analyse qu'effectuait ce document est erronée dans le cas des malaxeurs en injection basse : les injections séparées d'azote liquide et CO₂ liquide d'une part, et d'autre part l'injection basse de mélanges d'azote liquide et CO₂ liquide en réalisant le mélange au(x) point(s) d'injection sur le malaxeur donnent des résultats remarquables, et permettent effectivement une meilleure valorisation des gaz au travers d'échanges de frigories entre le CO₂ et l'azote.

Selon une des mises en oeuvre de l'invention, on dispose de plus, dans la partie haute de l'enceinte, d'un système de convection forcée, permettant de recycler et d'utiliser le pouvoir frigorifique des gaz froids résultant de l'injection basse des liquides cryogéniques.

Ce système de convection forcée peut être constitué en utilisant par exemple des ventilateurs ou encore en utilisant une turbine, par exemple, à titre d'illustration, des ventilateurs de type 0,38 KW équipés de 5 pâles inclinées à 45°.

Comme on l'illustrera mieux ci-dessous, les expérimentations effectuées par la Demanderesse démontrent clairement l'apport positif d'une injection de deux liquides cryogénique au lieu d'un, sur plusieurs paramètres et performances régissant un tel procédé de refroidissement.

Sans être en aucune façon limité par les explications que la Demanderesse avance ci-dessous, on peut penser que les phénomènes suivants interviennent, très avantageusement.

On injecte dans l'appareil deux liquides cryogéniques, et l'on réalise des échanges de frigories entre le CO₂ et l'azote, échanges extrêmement précieux comme on va le voir.

On assiste notamment au sous-refroidissement de la neige formée (on sait qu'en se retrouvant à la pression atmosphérique le CO₂ liquide injecté passe à l'état de neige et de gaz), sous-refroidissement qui augmente la capacité de transfert de froid au produit.

Mais par ailleurs en considérant de telles situations d'injections basses en mélangeurs, malaxeurs etc... on assiste selon toute vraisemblance ici au fait que l'azote liquide en libérant ses Kcal dans le produit, génère du gaz ayant une température très basse dans le haut de l'équipement, et qu'alors le CO₂ gazeux remontant vers le haut de l'équipement se solidifie au contact de l'azote très froid présent dans ce ciel gazeux, neige qui peut à nouveau retourner au contact du produit et transférer ses frigories à ce produit (en quelque sorte comme dans un procédé de type « injection haute »).

Et l'on conçoit qu'alors la présence d'une convection forcée ajoutée dans la partie haute d'un tel malaxeur (par exemple via la présence d'un ventilateur) puisse encore augmenter ces transferts.

D'autres caractéristiques et avantages de la présente invention apparaîtront ainsi plus clairement dans la description suivante, donnée à titre illustratif mais nullement limitatif, faite en relation avec les dessins annexés pour lesquels :
- la figure 1 est une représentation schématique d'un mélangeur classique de l'art antérieur (par exemple de viande) à deux auges, mettant en oeuvre, de chaque coté du mélangeur, une série de buses d'injection d'azote liquide dans la partie basse du mélangeur ;
- la figure 2 illustre un mode de mise en oeuvre de l'invention dans un malaxeur à une auge, à l'aide de deux injections séparées des deux fluides, réalisées du même coté de l'auge ;
- la figure 3 fournit une vue partielle de la partie haute (couvercle) d'une enceinte de malaxage conforme à une des mises en oeuvre de l'invention, la partie haute étant munie d'un système de convection forcée constitué par deux ventilateurs de 5 pâles inclinées à 45°;
- la figure 4 fournit un tableau récapitulant d'essais de mise en oeuvre de l'invention et d'essais comparatifs .

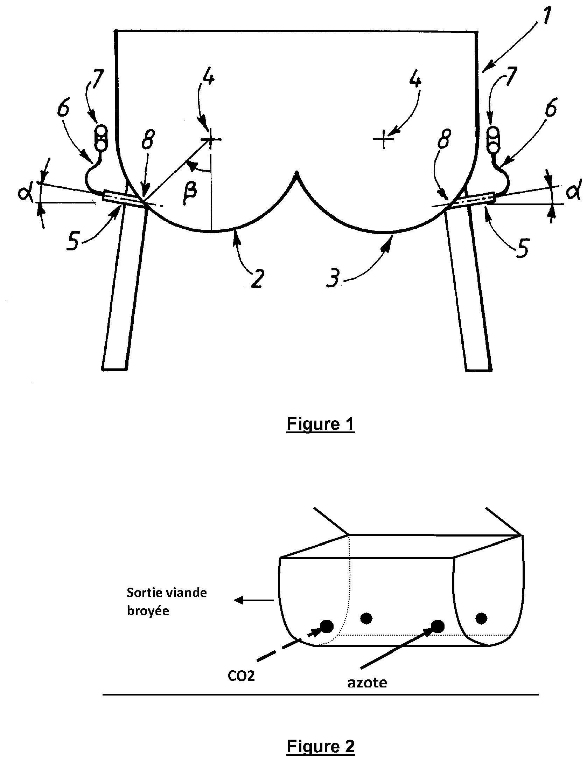

On reconnaît sur la figure 1 la partie inférieure d'un mélangeur classique de l'art antérieur (par exemple un mélangeur de viande) à deux auges 2 et 3, pour lequel on met en oeuvre une série de buses d'injection de fluide cryogénique, par exemple d'azote liquide, de chaque côté de l'appareil.

On a symbolisé par la référence 5 sur la figure, les buses d'injection du liquide cryogénique, se raccordant à la paroi du mélangeur, buses elles-mêmes alimentées au travers de flexibles 6 par une rampe de distribution et d'alimentation 7, avantageusement positionnée comme c'est le cas sur cette figure 1 en position haute par rapport aux buses d'injection.

Afin de ne pas charger inutilement la figure, on a représenté, au niveau de la référence 4, par de simples croix, les axes des arbres des rotors du mélangeur, un axe par auge du mélangeur comme représenté sur la figure 1.

Comme on pourra le constater à la lecture de cette figure 1, la position des buses d'injection le long de la paroi de chaque auge (angle bêta), ainsi que l'inclinaison de chaque buse d'injection par rapport à l'horizontale (angle alpha), adoptent ici des valeurs avantageuses, en vue d'une part, d'éviter que la trajectoire du jet de liquide cryogénique ne croise les arbres et rotors du mélangeur (éviter les risques de création de points froids), ceci tout en intéressant une portion maximum de la masse de produit à refroidir contenue dans le mélangeur, mais également d'autre part d'éviter, par l'inclinaison de la buse d'injection par rapport à l'horizontale, que lors du nettoyage ultérieur du mélangeur à l'eau, cette eau ne puisse remonter dans la ligne d'alimentation en liquide cryogénique.

On a ainsi pu considérer qu'un angle bêta voisin de 45° par rapport à la verticale donne de bons résultats, et qu'un angle alpha d'au moins 10° par rapport à l'horizontale est un réglage qu'il est avantageux d'adopter.

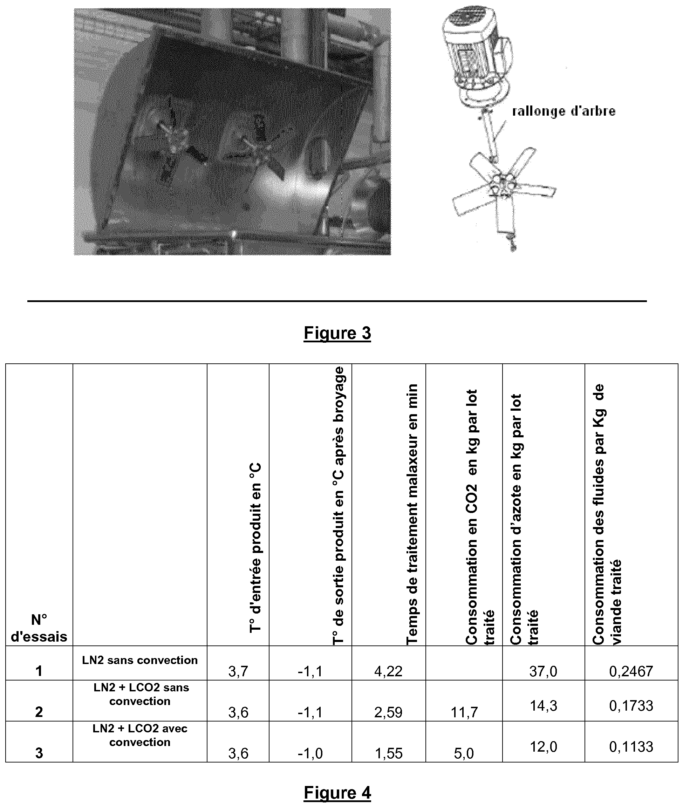

Comme signalé ci-dessus, la figure 3 fournit une vue partielle de la partie haute d'une enceinte de malaxage (couvercle) dont la partie haute est ici munie d'un système de convection forcée constitué par deux ventilateurs de 5 pâles inclinées à 45°. Le mode représenté ici n'est bien entendu qu'un exemple de réalisation, de nombreuses autres configurations (nombres de ventilateurs, nombres de pâles par ventilateur, inclinaison etc...) peuvent être envisagées sans sortir du cadre de la présente invention.

Le système de convection représenté sur la figure 3 est celui qui a été utilisé pour les exemples pratiques et comparatifs (avec et sans convection haute) relatés ci-dessous.

On détaille dans ce qui suit les conditions d'exemples pratiques de mise en oeuvre de l'invention et comparatif, dans le cas d'un malaxeur de refroidissement de masses de viandes :
- utilisation d'un malaxeur de marque HOBART, à une seule auge (tel que schématisé en figure 2, et quand la convection est présente elle est conforme à la figure 3 annexée);
- système d'injection basse : utilisation de deux injecteurs d'un même coté de l'auge, et deux électrovannes pilotées en même temps (on l'aura compris bien d'autres configurations d'injections, nombre, de chaque coté, du même coté etc........ sont envisageables et seront choisies en fonction des conditions opératoires, et notamment du type de malaxeur, de la taille du malaxeur etc... ).

Selon l'invention on peut mettre en oeuvre des injecteurs très simples, commercialement disponibles tels de simples orifices, ou encore des injecteurs plus élaborés comme ceux que la Demanderesse a développés tels que décrits dans les documents EP-744 578 ou EP-2 041 026.
- sources de fluide cryogénique utilisées :
   ▪ utilisation d'un réservoir de CO₂ liquide stocké à 15 bar et -20°C, réservoir qui est posé sur une balance afin d'évaluer la consommation ;
   ▪ utilisation d'une réserve d'azote liquide à une pression de 3.6 bars, ici encore réservoir qui est posé sur une balance afin d'évaluer la consommation ;
- le produit traité était un minerai de viande bovine fraîche à 20% de matière grasse ayant subi un premier broyage grossier (point de congélation -1°C, teneur en eau 62%, chaleur spécifique au dessus du point de congélation 0,85 kcal/kg, chaleur spécifique au dessous du point de congélation 0,36 kcal/kg, chaleur latente 55 kcal/kg) ;
- la température initiale de la viande pré-broyée est comprise dans la gamme allant de 3,5 à 4°C, la température de référence après broyage est sensiblement de -1°C.
- le temps moyen d'un cycle de malaxage est habituellement sur ce site industriel de 12 minutes, en injection basse CO₂.
- protocole suivi :
   ▪ Prise de température du minerai frais incorporé dans le malaxeur.
   ▪ Injection des liquides cryogéniques en continue, avec ou sans la présence de la convection forcée (63 Hertz) en se basant sur deux facteurs couplés et surveillés :
      - une température de la viande dans le broyeur de -0,6°C à - 1°C ;
      - une intensité moteur de 6 Ampères.
   ▪ En parallèle :
      ∘ L'intensité du malaxeur est relevée grâce à une pince ampérométrique.
      ∘ Les températures à l'intérieur du malaxeur, à l'extérieur du malaxeur (au niveau de l'ouverture/fermeture du couvercle) et la température des gaz d'extraction sont enregistrées.
   ▪ Prise de température du minerai après broyage.
   ▪ Vérification de l'aspect visuel et de la texture du minerai broyé ainsi que du steak formé en aval par un responsable de production, vérifications complétées pas une analyse bactériologique du produit formé.
   ▪ Les essais sont réalisés sur des lots de 150 kg de viande (selon l'essai considéré l'essai est répété 3 à 4 fois pour assurer une bonne reproductibilité et représentativité des résultats observés).
   ▪ Dans tous les cas les essais mettent en oeuvre des injecteurs de type simple (simples canalisations raccordées sur le mélangeur).
      - Essais N°1 - comparatif : Injection d'azote liquide seul, sans mise en oeuvre de convection additionnelle.
      - Essais N°2 - selon l'invention : essais sans mise en oeuvre de convection, injection des deux liquides cryogéniques séparément conformément à la figure 2 (deux injecteurs du même coté du mélangeur).
      - Essais N°3 : mêmes essais que le N°2 mais avec ici mise en oeuvre additionnelle d'une convection haute.

En d'autres termes ces essais sont caractérisés par une constante des paramètres d'intensité en fin de traitement (6A), du palier de congélation (l'intensité en fin de traitement étant toujours la même), du minerai utilisé et pré-broyé, du poids de lot traité, de la température de consigne après broyage recherchée (sensiblement - 1°C).

Les résultats des essais sont rassemblés dans le tableau présenté en figure 4 ci-après, résultats qui permettent de tirer les conclusions suivantes :
- on observe clairement par la mise en oeuvre de l'invention une réduction du temps de traitement, réduction qui est d'autant plus élevée quand une convection additionnelle haute est mise en oeuvre ;
- on observe clairement également une diminution de la consommation de fluide mis en oeuvre. Cette diminution de la consommation est à relier au sous-refroidissement du CO₂ réalisée grâce à l'invention, mais également à la limitation du phénomène de caléfaction, améliorant ainsi le transfert thermique ;
- la présence d'une convection forcée permet d'améliorer encore chacune de ces performances (temps de traitement et consommation) ;
- en d'autres termes le traitement dure moins longtemps, les moteurs sont donc mis en oeuvre moins longtemps, ce qui permet l'entrée de moins de calories en provenance de l'extérieur et une moindre énergie mécanique des moteurs transférée au système ;
- la quantité de frigories transférées à la masse, par rapport aux conditions habituelles de traitement du site est la même, le transfert a donc été amélioré, que ce soit avec présence de convection ou sans la présence de la convection forcée haute. Plus précisément, l'optimisation du procédé est à relier à une synergie d'effets cumulés.

L'utilisation de deux fluides permet d'opérer avec un CO₂ sous-refroidi, injecté au sein de la masse de matière, tout en créant un ciel gazeux froid, apte à re-solidifier le CO₂ gazeux s'échappant vers le haut de l'enceinte.

Et on le conçoit, quand une convection forcée haute est mise en oeuvre, celle-ci ne fait que renforcer ces effets.

S'agissant du rôle de cette convection forcée, ces résultats montrent sans ambiguïté le fait que cette convection forcée introduite dans la partie haute de l'enceinte a un effet incontestable et positif sur le transfert de frigories global réalisé sur la masse traitée.

Ceci pourrait paraître paradoxal compte tenu de la masse compacte traitée, ou encore compte tenu du temps disponible durant le traitement, temps qui pourrait apparaître trop faible.

On peut tenter d'apporter l'explication suivante : à titre comparatif, dans un tunnel cryogénique traditionnel on installe un ventilateur de 0,20kW/ m² pour atteindre une convection de 80W/m/°K. Selon la présente invention, et c'est tout son mérite, on peut installer typiquement 7,5 kW sur un seul m², pour disposer d'une convection que l'on peut estimer à environ 200W/m²/°K, ce qui est considérable.

On peut considérer que les conditions de l'invention approchent alors pour partie les convections du type « impaction » (on dit aussi « impingement » dans ce milieu).

## Revendications

1. Procédé de refroidissement de produits, notamment alimentaires, dans un appareil de refroidissement, l'appareil utilisé étant une enceinte comprise dans le groupe formé des mélangeurs, malaxeurs, ou encore broyeurs, pouvant contenir une masse de produit à refroidir, à l'aide d'un liquide cryogénique injecté au sein de la masse de matière dans la partie basse de l'enceinte, **se caractérisant en ce que** l'on injecte au sein de la masse de matière dans la partie basse de l'enceinte deux liquides cryogéniques, azote et CO₂, l'azote liquide et le CO₂ liquide étant injectés séparément en au moins deux points d'injection de l'appareil.

2. Procédé de refroidissement selon la revendication 1, **caractérisé en ce que** l'on dispose de plus, dans la partie haute de l'enceinte, d'un système de convection forcée, permettant de recycler et d'utiliser le pouvoir frigorifique des gaz froids résultant de l'injection basse des liquides cryogéniques.

## Patentansprüche

1. Verfahren zur Kühlung von Produkten, insbesondere von Lebensmitteln, in einer Kühlvorrichtung, wobei es sich bei der verwendeten Vorrichtung um eine Umschließung handelt, die in der aus Mischern, Knetern oder Mühlen gebildeten Gruppe umfasst ist, die eine Masse des zu kühlenden Produkts enthalten kann, mittels einer kryogenen Flüssigkeit, die in die Materialmasse im unteren Bereich der Umschließung injiziert wird, **dadurch gekennzeichnet, dass** zwei kryogene Flüssigkeiten, Stickstoff und CO₂, in die Materialmasse im unteren Bereich der Umschließung injiziert werden, wobei der flüssige Stickstoff und das flüssige CO₂ getrennt an mindestens zwei Injektionsstellen der Vorrichtung injiziert werden.

2. Verfahren zur Kühlung nach Anspruch 1, **dadurch gekennzeichnet, dass** darüber hinaus im oberen Bereich der Umschließung ein Zwangskonvektionssystem angeordnet ist, das ein Zurückführen und Verwenden der Kälteleistung der kalten Gase ermöglicht, die aus der unteren Injektion der kryogenen Flüssigkeiten resultieren.

## Claims

1. Process for cooling products, in particular foodstuffs, in a cooling device, the device used being a container from the group comprising blenders, mixers or even grinders, configured to contain a mass of product to be cooled using a cryogenic liquid injected within the mass of matter in the lower part of the container, **characterised in that** two cryogenic liquids, nitrogen and CO₂, are injected within the mass of matter in the lower part of the container, the liquid nitrogen and the liquid CO₂ being injected separately in at least two injection points of the device.

2. Cooling process according to claim 1, **characterised in that** the container further features, in its upper part, a forced convection system, configured to recycle and use the cooling power of the cold gases resulting from the injection of cryogenic liquids in the lower part.
